(19) Europäisches Patentamt
European Patent Office
Office européen des brevets

(11) **EP 4 237 683 B1**

(12) **EUROPEAN PATENT SPECIFICATION**

(45) Date of publication and mention
of the grant of the patent:
**25.06.2025 Bulletin 2025/26**

(21) Application number: **21801827.3**

(22) Date of filing: **25.10.2021**

(51) International Patent Classification (IPC):
$F03D\ 7/02\ ^{(2006.01)}$    $F03D\ 7/04\ ^{(2006.01)}$
$H02J\ 3/38\ ^{(2006.01)}$    $H02J\ 3/48\ ^{(2006.01)}$
$H02J\ 3/24\ ^{(2006.01)}$

(52) Cooperative Patent Classification (CPC):
**F03D 7/0284; F03D 7/043; H02J 3/381; H02J 3/48;**
F05B 2270/1033; F05B 2270/107; F05B 2270/337;
H02J 3/241; H02J 2300/28; Y02E 10/72;
Y02E 10/76

(86) International application number:
**PCT/DK2021/050315**

(87) International publication number:
**WO 2022/089702 (05.05.2022 Gazette 2022/18)**

(54) **METHODS AND SYSTEMS FOR CONTROLLING A WIND TURBINE GENERATOR IN RESPONSE TO A FREQUENCY DEVIATION**

VERFAHREN UND SYSTEME ZUR STEUERUNG EINES WINDTURBINENGENERATORS ALS REAKTION AUF EINE FREQUENZABWEICHUNG

PROCÉDÉS ET SYSTÈMES DE COMMANDE D'UN GÉNÉRATEUR D'ÉOLIENNE EN RÉPONSE À UN ÉCART DE FRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2020 DK PA202070709**

(43) Date of publication of application:
**06.09.2023 Bulletin 2023/36**

(73) Proprietor: **VESTAS WIND SYSTEMS A/S**
**8200 Aarhus N (DK)**

(72) Inventors:
• **WU, Dan**
**8200 Aarhus N (DK)**
• **PANNI, Rubin**
**8200 Aarhus N (DK)**
• **NAYEBI, Kouroush**
**8200 Aarhus N (DK)**

(74) Representative: **Vestas Patents Department**
**Hedeager 42**
**8200 Aarhus N (DK)**

(56) References cited:
**CN-A- 108 199 421       US-A1- 2015 137 519**
**US-A1- 2015 159 627       US-A1- 2019 003 456**

• **ANONYMOUS: "EirGrid Grid Code", EIRGRID GRID CODE VERSION 3.3, 30 January 2009 (2009-01-30), XP055489806**

Description

TECHNICAL FIELD

The present disclosure relates to methods and systems for controlling a wind turbine generator in response to a frequency deviation.

BACKGROUND

Regulators and operators of power networks expect connected power plants to adhere to a 'grid code' and to provide particular services to the power network.

For example, some operators require power plants to support the power network when the frequency of the power network deviates from the normal operational range, also referred to as a frequency dead band. A range of control strategies have been developed for wind power plants to provide support during frequency deviations. During these events, power plant controllers and wind turbine controllers implement frequency support by changing active power output levels to counteract the frequency deviation. In under-frequency events, where the frequency level deviates below the frequency dead band, active power output levels are increased to support the network. In over-frequency events, where the frequency level rises above the frequency dead band, active power output levels are decreased to provide support.

After the frequency deviation, active power is increased or decreased back to normal levels according to a limited ramp rate. However, in some situations, active power output of a wind turbine is limited, based generally on the available wind or another user-implemented limit. In contrast, controllers determine the active power output levels based on predefined curves, and so may issue active power commands that are outside the limits. This causes an effect known as wind-up where the actual active power output level of the turbine ramps back to normal levels after a delay due to the difference between the stipulated level from the controller and the limit level.

Among relevant prior art are US 2019/0003456 A1, US 2015/137519 A1, US 2015/159627 A1 and CN 108 199 421 A.

It is an aim of the present invention to address one or more of the disadvantages associated with the prior art.

SUMMARY OF THE INVENTION

According to an aspect of the present invention there is provided a method for controlling active power output of a wind turbine generator in response to a frequency event on a power network to which the wind turbine generator is connected, and wherein the active power output of the wind turbine generator is limited to be below an upper active power limit and/or above a lower active power limit. The method comprises determining and dispatching active power references to a controller of the wind turbine generator for controlling the wind turbine generator. During the frequency event, in which the frequency level of the power network is outside a frequency deadband, the active power references are determined by: determining an active power value based on a measured frequency of the power network; comparing the determined active power value with one of the upper active power limit or the lower active power limit; and if the determined active power value is outside the limit the active power reference is set equal to the limit, or if the determined active power value is not outside the limit the active power reference is set as the determined active power value. After the frequency event, in which the frequency level of the power network is within the frequency deadband, the active power references are determined to change from the final value during the frequency event to a baseline active power value according to a ramp rate limit.

The term reference is used herein to mean an active power set point. The above method ensures that, throughout the deviation and immediately after the deviation, the reference dispatched to the generator will be at least equal to the limit, if not within the allowable range defined above or below the limit. Furthermore, it ensures that there is a match between the output of the wind turbine generator and the reference it receives all through the deviation, so that when the deviation ends, the ramping can begin from a common value.

During the frequency event, determining the active power value based on the measured frequency of the power network may comprise: determining an active power adjustment value that corresponds to the measured frequency; and subtracting the active power adjustment value from an active power baseline value.

Determining the active power adjustment value may comprise comparing the measured frequency with a chart or look-up table indicating a correspondence between active power and frequency.

Setting the active power reference to be equal to the limit may comprise: determining an active power limit adjustment value as the difference between an active power baseline value and the active power limit; and subtracting the active power limit adjustment value from the active power baseline value.

The active power baseline value may comprise a minimum value of a nominal active power value and a curtailed active power value.

If during the frequency event the frequency level is below the deadband, the relevant limit is the upper active power limit, and the upper active power limit may be based on the available active power. If during the frequency event the frequency level is above the deadband, the relevant limit is the lower active power limit and the lower active power limit may be based on a user preference.

According to another aspect of the invention, there is provided a method for controlling active power output of a wind turbine generator in response to a frequency event on a power network to which the wind turbine generator is connected, wherein the active power output of the wind turbine generator is limited to be below an upper active power limit and/or above a lower active power limit. The method comprises: determining and dispatching active power references to a controller of the wind turbine generator for controlling the wind turbine generator. During the frequency event, in which the frequency level of the power network is outside a frequency deadband, the active power references are determined based on a measured frequency of the power network. After the frequency event, in which the frequency level of the power network is within the frequency deadband, the active power references are determined to change from a restart active power value to a baseline active power value according to a ramp rate limit, the restart active power value being equal to a measured active power output of the wind turbine generator.

The above method makes use of a point in time, the end of the event or deviation, to correct the value of the reference, thereby ensuring that the reference is at or within the relevant limit when it is necessary for it to be. This also means that the reference and output will be at the same level when the frequency deviation ends so that ramping begins for the wind turbine generator straight away and with no delay.

During the frequency deviation the active power reference value may be determined by: determining an active power adjustment value by comparing the measured frequency with a chart or look-up table indicating a correspondence between active power and frequency; and subtracting the active power adjustment value from a baseline active power value.

After the frequency deviation determining the active power references may comprise determining the restart active power value. Determining the restart active power value may comprise: determining a restart active power adjustment value by subtracting the measured active power output from a baseline active power value; and subtracting the restart active power adjustment value from the baseline active power value.

The active power baseline value may comprise a minimum of an available active power value and a curtailed active power value.

If during the frequency event the frequency level is below the deadband, the relevant limit is the upper active power limit and the upper active power limit may be based on the available active power. If during the frequency event the frequency level is above the deadband, the relevant limit is the lower active power limit and the lower active power limit may be based on a user preference.

The frequency deviation may be deemed to have ended upon determination that a trigger condition is met and/or upon receipt of a trigger generated in response to a trigger condition being met. The trigger condition may comprise at least one of: the frequency level being within the frequency deadband; the frequency level is equal to or exceeds a threshold frequency value; a difference between the measured active power value and the relevant active power limit is equal to or exceeds a threshold value.

According to an aspect of the invention, there is provided a power plant controller configured to perform one of the methods described above.

According to an aspect of the invention, there is provided computer-readable storage medium comprising instructions that, when executed by a computer, cause the computer to perform one of the methods described above.

According to an aspect of the invention, there is provided a method for controlling active power output of a wind turbine generator in response to a frequency event on a power network to which the wind turbine generator is connected, and wherein the active power output of the wind turbine generator is limited to an active power range between an upper active power limit and a lower active power limit. The method comprises determining and dispatching active power references to a controller of the wind turbine generator for controlling the wind turbine generator such that the value of the active power reference immediately after the frequency event is within the allowable active power range.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way within the scope of the appended claims.

## BRIEF DESCRIPTION OF THE DRAWINGS

One or more embodiments of the invention will now be described, by way of example only, with reference to the accompanying drawings, in which:

Figure 1 shows a power network including a wind power plant and a power plant controller;

3

**Figure 2** shows a system diagram of a frequency controller of the power plant controller of Figure 1 according to an embodiment of the invention;

**Figure 3** shows a pair of charts illustrating the response of the frequency controller of Figure 2 to a frequency deviation;

**Figure 4** shows a method of operation of the frequency controller of Figure 2;

**Figure 5** shows a system diagram of a frequency controller of the power plant controller of Figure 1 according to another embodiment of the invention;

**Figure 6** shows a pair of charts illustrating the response of the frequency controller of Figure 5 to a frequency deviation; and

**Figure 7** shows a method of operation of the frequency controller of Figure 5.

## DETAILED DESCRIPTION

Generally, the present application relates to methods and systems of controlling a power plant controller and a wind turbine generator to ensure that the phenomenon known as "wind-up" is avoided. Here, the term "wind-up" refers to the mismatch between set point and output active power values of an output-limited wind turbine generator. The methods and systems described herein act to ensure that, at the end of a frequency event, when the active power value is able to ramp back up or down to normal levels, the ramping of the output value does not have to wait for the set point value to reach a certain level. That is, that the normal levels are regained as soon as possible whilst adhering to the ramp rate limit imposed by the system on active power changes. The benefit of this is that the generator can optimise its active power output where it may have previously been experiencing a delay.

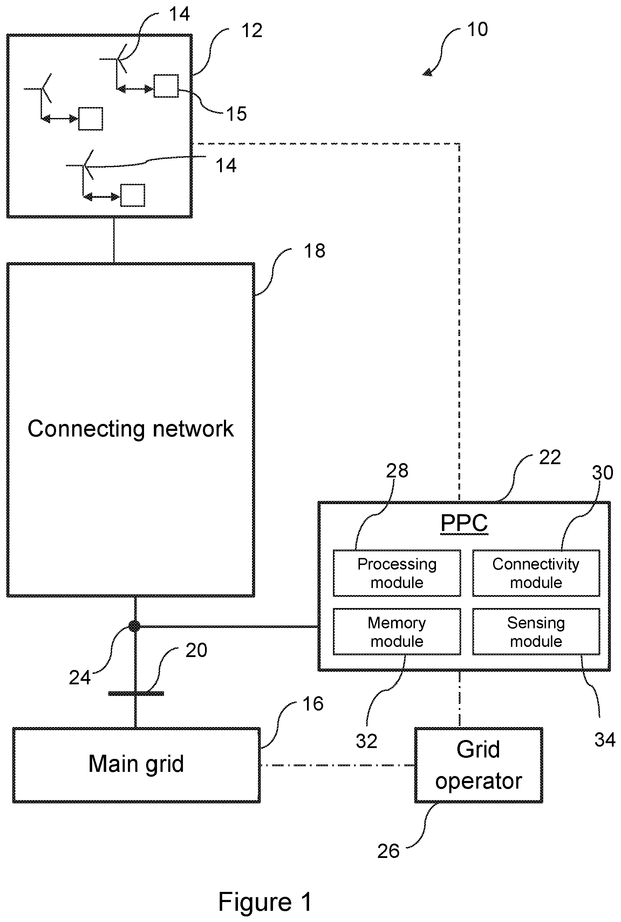

Figure 1 illustrates a typical architecture in which a wind power plant (WPP), which may also be referred to as a wind park or wind farm, is connected to a main grid as part of a wider power network. As will be understood by the skilled reader, a WPP comprises at least one wind turbine generator (WTG), and is also known as a wind park or a wind farm. A WTG is commonly referred to as a wind turbine. The examples shown are representative only and the skilled reader will appreciate that other specific architectures are possible, in relation to wind power plants, power plants for other renewable energy sources such as solar power plants, bio energy power plants, or ocean/wave/tidal energy plants, and to hybrid power plants having a combination of different types of renewable energy power plants. Thus, the invention also relates to renewable energy power plants and renewable energy generators in general, rather than being specific to wind power plants and generators as in the Figures. The components of the wind power plant and power network are conventional and as such would be familiar to the skilled reader. It is expected that other known components may be incorporated in addition to or as alternatives to the components shown and described in Figure 1. Such changes would be within the capabilities of the skilled person.

Figure 1 shows a power network 10 incorporating a WPP 12 and a power plant controller 22, referred to hereafter as PPC 22. The WPP 12 includes a plurality of WTGs 14. Each of the plurality of WTGs 14 converts wind energy into electrical energy, which is transferred from the WPP 12 to a main transmission network or main grid 16, as active power and/or current, for distribution. Individual generators may each be referred to in this description as a 'unit'.

Although not illustrated in this Figure, the WPP 12 may also include compensation equipment, such as a static synchronous compensator (STATCOM) or another type of synchronous compensator, configured to provide reactive power or reactive current support as required. The WPP 12 may also include a battery energy storage system.

Each of the WTGs 14 is associated with a respective WTG controller 15. In some examples, a set of WTGs may share a single, semi-centralised WTG controller, such that there are fewer WTG controllers than WTGs. As would be understood by the skilled person, WTG controllers 15 can be considered to be computer systems capable of operating a WTG 14 in the manner prescribed herein, and may comprise multiple modules that control individual components of the WTG or just a single controller. The computer system of the WTG controller 15 may operate according to software downloaded via a communications network or programmed onto it from a computer-readable storage medium.

During normal operation of the WPP 12, the WTG controllers 15 operate to implement active and reactive current and/or power requests received from the PPC 22 to provide frequency and voltage support to the main grid 16. During extraordinary conditions, the WTG controllers 15 operate to fulfil predetermined network requirements, and also act to protect the WTGs 14 from any potentially harmful conditions.

The WPP 12 is connected to the main grid 16 (also called the main power network) by a connecting network 18. The WPP 12 and the main grid 16 are connected at a Point of Interconnection (PoI) 20, which is an interface between the WPP 12 and the main grid 16. The PoI 20 may also be referred to as the Point of Common Connection, which may be abbreviated to 'PCC' or 'PoCC'.

The Power Plant Controller (PPC) 22 is connected to the main grid 16 at a Point of Measurement (PoM) 24 and is connected to the WTG controllers 15. The role of the PPC 22 is to act as a command and control interface between the WPP 12 and the grid 16, and more specifically, between the WPP 12 and a grid operator 26, such as a transmission system operator (TSO) or a distribution system operator (DSO). The PPC 22 is a suitable computer system for carrying out the controls and commands as described above and so incorporates a processing module 28, a connectivity module 30, a memory module 32 and a sensing module 34. The PPC 22 may also receive information regarding the grid 16 and/or the local buses, substations and networks from an energy management system (not shown). The WPP 12 is capable of altering its power or current output in reaction to commands received from the PPC 22.

As part of its operation, the PPC 22 generates and sends dispatch signals to the WTG controllers 15. The WTG controllers 15 control the WTGs according to set points contained within the dispatch signals.

The PPC 22 acts to operate the WTGs 14 to provide frequency support to the grid 16 where frequency deviates from an acceptable frequency range, also known as a frequency deadband. To provide frequency support, the PPC 22 issues dispatch signals configured to cause the WTGs 14 to supply active power to provide frequency support to the power network. The signals are determined to control the active power output of the WTGs 14 so that frequency levels are supported in returning to the deadband. The deadband is generally a small region around the operating frequency of the power network, typically 50 Hz, or in some examples, 60 Hz, as measured at the PoI 20 or PoM 24.

When frequency level drops outside of the deadband and is therefore below the deadband, the PPC 22 provides frequency support by dispatching increased active power set points to the WTGs 14. When frequency levels rise above deadband, the PPC 22 provides frequency support by dispatching decreased active power set points. These are under- and over-frequency events respectively.

In conventional PPCs, the active power set point is dictated by an active power-frequency chart, which is in effect a suitable data structure containing associated values of frequency levels against active power set points. As such, using the active power-frequency chat, the PPC receives a measured frequency level and generates a corresponding active power set point, which it then dispatches to the wind turbine controllers. In some PPCs, the measured frequency level is used to determine an active power delta value, i.e. a change from baseline, and this is subtracted from the baseline level to give the set point. In either circumstance, a set point is generated directly from the measured frequency level. Note that this functionality is conventional and so further discussion will be limited.

A baseline active power level, as discussed herein, is used to indicate an active power level during normal operation. For example, this may be the rated active power, or another active power that was set by the PPC according to various control aspects. In some cases, the baseline active power level may correspond to a curtailed active power level.

In this conventional situation, the PPC dispatches set points with no regard to limitations on the active power output of the WTG. For example, where an underfrequency event occurs, the active power output of the WTG above the baseline level is limited by a maximum active power value corresponding to the available active power output based on the wind. Similarly, in overfrequency events, the active power output below the baseline level is often limited by the grid code or by a user-generated or user-determined minimum output level. In some examples, the active power output may also be limited by physical constraints placed on the WTG.

The PPC may therefore demand more or less active power via its set point than the respective maximum or minimum limit of the WTG. If it does, the WTG will output active power at the limit, not the set point, but the set point will remain at the value outside the limit. Once the frequency event ends and the frequency level returns to the deadband, the PPC ramps the active power set point back to the baseline level. If the PPC has demanded a set point outside the limit but the WTG is outputting at the limit, there will be a delay between when the PPC begins to ramp the set point and when the set point meets the limit and hence when the WTG can begin to ramp its output. This delay causes under- or over-generation of active power where it is not necessary or desirable, and may cause the plant to be penalised by the transmission system operator, and therefore is best avoided.

This phenomenon of the mismatch between PPC dispatched set point and WTG output and the resulting delay in regaining the baseline active power output after the frequency event caused by this mismatch may be referred to as PPC wind-up. It should be noted that the limits that cause the mismatch are typically variable limits, such as available active power.

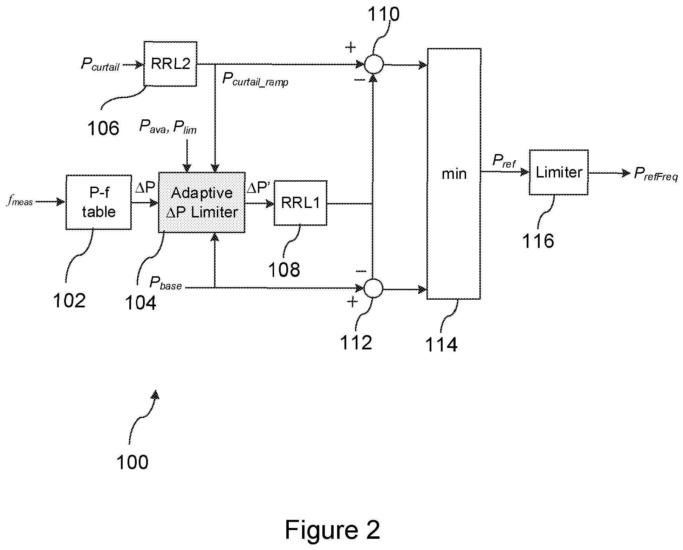

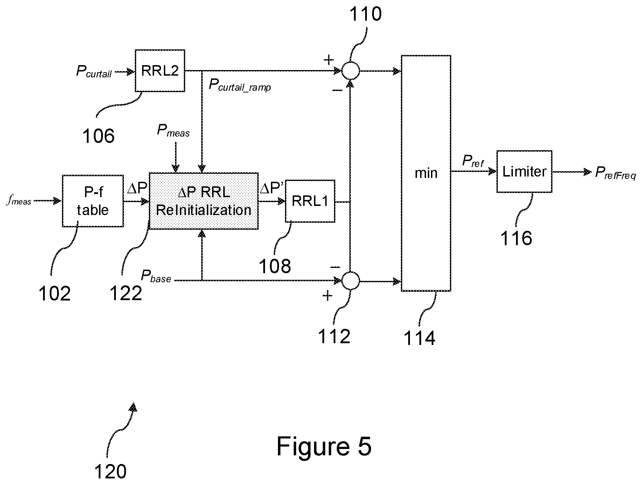

Figures 2 to 4 and Figures 5 to 7, as described below, are provided as two embodiments of the invention that counteract and substantially eliminate the delays associated with PPC wind-up. The control schemes or algorithms of the embodiments illustrated in Figures 2 and 5 operate to achieve the same outcome but do so by different means. The outcome achieved is that after the frequency event, the active power set point generated by these controllers ramps from the limit level back to the baseline level so that there is no delay in the output of the WTGs ramping back to the baseline either. Essentially, therefore, the embodiments both specify ways in which the set point (which may be referred to an active power set point or an active power reference herein) can be determined to ensure that its value immediately after the frequency event is equal to or within the limits set by the available power (upper limit) and user preference or WTG constraint (lower limit).

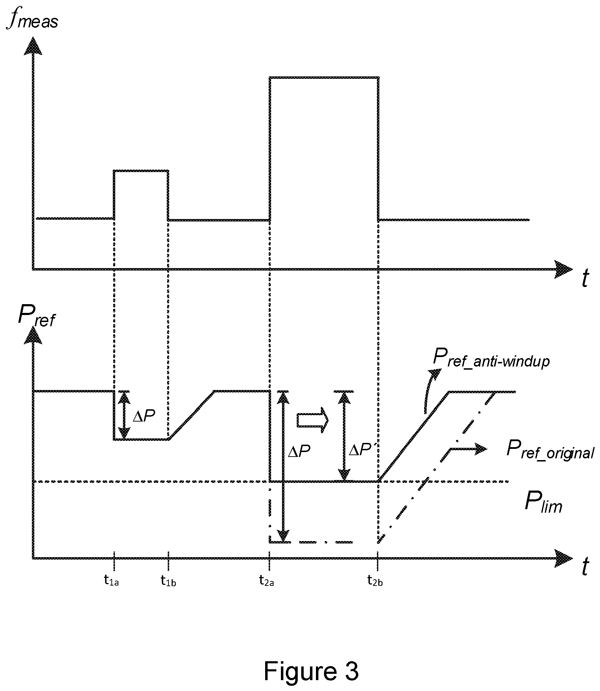

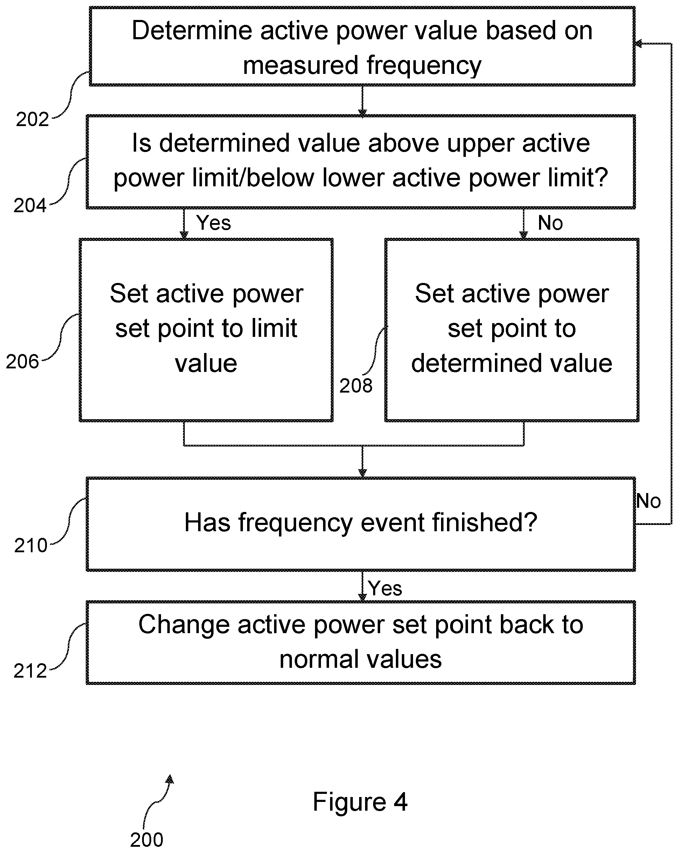

Figure 2 illustrates a frequency control scheme, algorithm, or "controller" 100, which forms part of the processing module 28 of the PPC 22. Figures 3 and 4 show a chart indicating an example scenario using the controller 100 of Figure 2 and a method of operation of the controller 100 of Figure 2.

In Figure 2, the frequency controller 100 receives various active power levels and measured frequency and outputs a value for the active power set point. The controller 100 comprises an active power-frequency correspondence table 102, which may be referred to as a P-f table 102. Initially, the controller 100 receives a measured frequency, $f_{meas}$, at

the P-f table 102. The P-f table 102 determines an active power adjustment or change value, $\Delta P$, as an output. The determined active power adjustment value is input to an adaptive limiter 104. The P-f table 102 may comprise a look-up table of measured frequency vs change in output active power $\Delta P$, or may comprise a look-up table of change in frequency from a nominal value $f_{nom}$ (i.e. a frequency error value of $f_{meas}-f_{nom}$) vs change in output active power $\Delta P$.

The adaptive limiter 104 receives values as inputs such as one or more power limits, here referred to as $P_{ava}$ and $P_{lim}$, and the baseline active power value $P_{base}$. Where a curtailed active power value, $P_{curtail}$, is also provided to the PPC 22, this value is passed through a ramp rate limiter, which is referred to as RRL2 or by reference numeral 106 here, to give a ramped curtailed active power, $P_{curtail\_ramp}$, and this value is also provided as an input to the adaptive limiter 104.

The adaptive limiter 104 performs a comparison to identify whether the set point based on the adjustment value $\Delta P$ from the P-f table 102 would be outside the relevant limit. In other words, the adaptive limiter 104 compares a proposed set point value with the limits and determines if the proposed set point is above an upper active power limit, i.e. available active power $P_{ava}$, or is below a lower active power limit, i.e. a user limit $P_{lim}$. The output of the adaptive limiter is a new adjustment value $\Delta P'$. The value of $\Delta P'$ is based on the comparison. If the proposed set point does fall outside the relevant limit, then $\Delta P'$ is determined so that the resulting set point is at least equal to the limit. This is achieved by setting the value of $\Delta P'$ to be equal to the limit value subtracted from a baseline value. If the proposed set point does not fall outside the relevant limit then the value of $\Delta P'$ is the adjustment value $\Delta P$.

In the adaptive limiter 104, the proposed set point, which is compared with the limit, is determined by subtracting the adjustment value $\Delta P$ received from the P-f table 102 from the from the minimum of the ramped curtailed active power value and the baseline active power value.

Thus, the determination made by the adaptive limiter 104 in this embodiment can be classified by a pair of equations. During an overfrequency event, the determination is follows:

$$\Delta P' = \begin{cases} \min(P_{curtail\_ramp}, P_{base}) - P_{lim}, & if \ \min(P_{curtail\_ramp}, P_{base}) - \Delta P \leq P_{lim} \\ \Delta P, & otherwise \end{cases}$$

During an underfrequency event, the determination is as follows:

$$\Delta P' = \begin{cases} \min(P_{curtail\_ramp}, P_{base}) - P_{ava}, & if \ \min(P_{curtail\_ramp}, P_{base}) - \Delta P \geq P_{ava} \\ \Delta P, & otherwise \end{cases}$$

The output of the adaptive limiter, the new adjustment value $\Delta P'$, is passed through a ramp rate limiter 108 to ensure that the change does not exceed a predetermined ramp rate, before being input to two difference junctions 110 and 112. The difference junctions 110, 112 subtract the adjustment value output from the limiter $\Delta P'$ from the curtailed ramped active power value and the baseline active power value respectively. A minimum of these two differences is determined at 114 to determine a set point value, $P_{ref}$. The reference value is passed through a final hard limiter 116 to provide a final set point value $P_{refFreq}$. This value is dispatched to the WTGs 14.

To illustrate the effect the adaptive limiter 104 of the frequency controller 100 has on the dispatched set point value, Figure 3 illustrates a chart indicating two overfrequency events. Initially, the active power set point is equal to the baseline level. A first overfrequency event occurs at time $t_{1a}$, when the measured frequency deviates above the frequency deadband.

In response, the frequency controller 100 calculates an adjustment value $\Delta P$ from the baseline level based on the P-f table 102. As the adjustment value does not cause the proposed set point to be below the limit $P_{lim}$, then the output of the limiter 104, namely the new adjustment value $\Delta P'$, is the same as the adjustment value $\Delta P$. Once the frequency event ends at $t_{1b}$ the active power set point ramps back to the baseline level according to the ramp rate limit.

At time $t_{2a}$ a second overfrequency event occurs. The deviation is greater than the first event so the response by the controller is greater. As can be seen in Figure 3, the $\Delta P$ value generated from the P-f table 102 based on the measured frequency would cause the set point value to be below the limit, i.e. $\min(P_{curtail\_ramp}, P_{base}) - \Delta P \leq P_{lim}$, as in the equation above. Thus, the adaptive limiter 104 in this circumstance recalculates the value of $\Delta P'$ so that the set point will be equal to the limit value $P_{lim}$.

Therefore, once the frequency event ends at time $t_{2b}$, the active power set point and the active power output of the WTG both ramp up together from the limit back to the baseline value $P_{lim}$. This ramp is labelled $P_{ref\_anti-windup}$ in Figure 3, and can be compared and contrasted with what would happen in conventional arrangements, which is illustrated by the dotted and dashed line labelled $P_{ref\_original}$. In a sense, therefore, the adaptive limiter 104 acts to clamp the set point to the baseline limit value $P_{lim}$ if the request setpoint falls below that limit value.

This action by the frequency controller 100 can be illustrated as a method 200 as shown in Figure 4. The method 200 illustrates the determination of active power set points in general; it will be appreciated that the set points are dispatched to the WTGs 14 and their controllers 15 by the PPC 22 in a suitable manner.

As shown in Figure 4, at a first step 202, an active power value is determined based on measured frequency. When considered in relation to Figure 2, the determined active power value is the proposed set point, i.e. the adjustment value subtracted from the baseline value, where the adjustment value has been determined based on the measured frequency. The active power value in this step is for comparison with the relevant active power limit, as will be discussed in the next step, and so can be determined in any way, whether it is based fully or partially on the frequency, a look-up table, a chart, on an equation, or by other suitable means.

At the next step 204, the value is compared with the relevant upper or lower active power limit. As discussed in relation to Figure 2 and 3, this is to determine whether the proposed set point value is outside the limit.

At step 206, if the value is outside the limit, the active power set point is set as the limit value. At step 208, if the value is not outside the limit, the active power set point is set as the determined value. Step 206 corresponds to the situation discussed in relation to the overfrequency event at time $t_{2a}$ in Figure 3, while step 208 corresponds to the overfrequency event at time $t_{1a}$.

When it is determined, at step 210 that the frequency event has finished, the method concludes with step 212 by changing the active power set point from the final value during the frequency event to the baseline active power value. In other words, the active power set point, and, therefore, the active power output of the WTG, is ramped back to normal levels according to the ramp rate limit.

While the above method is described as being performed during a frequency deviation, it will be appreciated that the determination of set points according to measured frequency may be performed at all times, and the checks performed during the method and ramping are applicable only when a frequency event is ending.

In the second embodiment of the frequency controller, shown by Figure 5, the frequency controller 120 incorporates a ramp rate initialization module 122 in place of the adaptive limiter 104. The other features of the controller 120 are the same as in the controller 100 of Figure 2, so have been labelled with the same reference numerals.

The ramp rate initialization module 122 acts to generate a set point equal to or greater than the limit value immediately after the end of the frequency event so that the set point ramps from that value rather than a lower value.

To do so, the module 122 receives the adjustment value $\Delta P$, determined from the P-f table 102 and the curtailed power value and baseline power value $P_{curtail\_ramp}$ and $P_{base}$. The module 122 also receives a value of the measured active power output value of the WTG, $P_{meas}$.

During the frequency deviation, the module 122 outputs a $\Delta P'$ value equal to the $\Delta P$ value received from the P-f table 102. At the end of the frequency deviation, typically in response to a trigger indicating the end of the frequency deviation, the module 122 determines a restart or reinitialization value, $\Delta P'$, that is equal to the difference between the minimum of the baseline or curtailed active power value and the measured active power value. This can be represented as before the trigger, $\Delta P' = \Delta P$, while immediately after the trigger $\Delta P' = \min(P_{curtail\_ramp}, P_{base}) - P_{meas}$. Once this restart value has been determined and dispatched, the module 122 returns to setting $\Delta P' = \Delta P$. However, as the frequency deviation will have ended and frequency levels returned to the deadband, the $\Delta P$ value determined from the P-f table 102 and consequently the value $\Delta P'$ will be minimal, possibly zero. This change in $\Delta P'$ will be mitigated by the ramp rate limiter 108 so that the change in $\Delta P'$ does not cause a sudden jump in the value of the set point. Accordingly, the active power value will slowly ramp back to the baseline value.

It is noted above that the end of the frequency deviation is typically marked using a trigger. By this it is meant that a trigger is communicated to the frequency controller when a trigger criteria is met. The trigger criteria typically indicates that the frequency deviation is ended. The trigger criteria may comprise the return of the frequency level to the deadband, and this may be determined based on a change in the $\Delta P$ value from the P-f table 102 from a substantial $\Delta P$ value to a negligible $\Delta P$ value. In other embodiments, the trigger criteria may be met when it is determined that the frequency level is above or below a particular threshold value, when it is determined that a rate of change of frequency is meets a particular threshold, or when a difference between the measured active power level and an active power limit level is at a threshold value. The difference between measured and limit active power being at a threshold may indicate that the measured frequency is still outside the deadband, but that the power value will not longer be outside its respective limit, so no wind-up will occur.

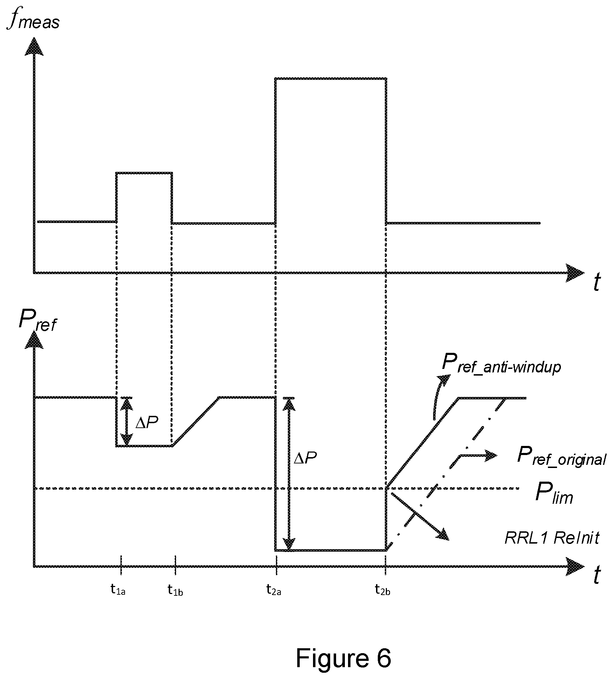

This process is illustrated in Figure 6, which is a chart illustrating two overfrequency events that are similar in size and timing to those of Figure 3. Accordingly, the same time points $t_{1a}$ to $t_{1b}$ and $t_{2a}$ to $t_{2b}$ are used for the frequency events.

The first overfrequency deviation is between times $t_{1a}$ and $t_{1b}$. At $t_{1a}$, the frequency rises above the deadband. Accordingly, as per the P-f table 102, a $\Delta P$ value is calculated and passed through the limiter without change to generate a set point. The $\Delta P$ value passed from the P-f table 102 is unchanged during the deviation.

At time $t_{1b}$ the overfrequency deviation ends as the frequency level returns to the deadband. A trigger is received by the adaptive limiter 122 indicating this. In response, the module 122 generates the restart $\Delta P'$ value, as described above. In this case, as the active power output and set point during the deviation has not exceeded the limit, the set point generated using the restart adjustment value is the same as the set point during the deviation, and therefore the ramping back to the baseline is from the same set point.

In contrast, in the second deviation, beginning at time $t_{2a}$, the frequency deviates to a greater value. Accordingly, during the deviation, the set point generated based on the $\Delta P$ value is below the limit. It will be appreciated, however, that the output of the WTG will be at the limit during this period.

At the end of the deviation, at time $t_{2b}$, the frequency returns to the dead band and in response to receiving this trigger, the module 122 determines the restart adjustment value so that the set point immediately after is equal to the measured active power output. The measured active power output is at the limit, as already mentioned, so the set point immediately after the deviation ends is set to the limit and the ramping is begin from this level according to the ramp rate limit.

Again, as shown in Figure 3, a dotted and dashed line indicates the situation without the adaptive limiter where the ramping is subject to the wind-up of the PPC.

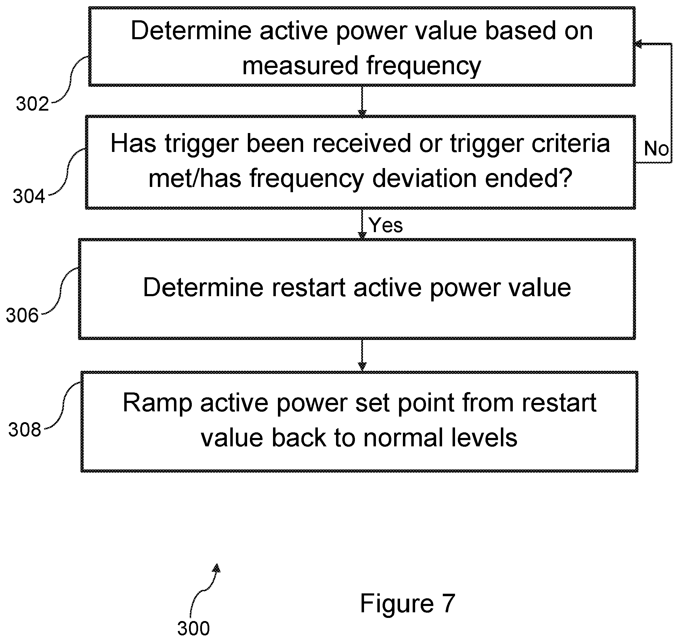

Figure 7 illustrates a general method 300 governing the embodiment of Figures 5 and 6. The method 300, as with the method 200 of Figure 4, demonstrates how active power references are generated. It will be appreciated that the PPC 22 dispatches the active power references to the WTGs 14 and their controllers 15 appropriately after determination.

As shown in Figure 7, at a first step 302 of the method active power references are determined based on a measured frequency of the power network. This step may be performed at all times during the operation of the controller other than immediately after the frequency event, as will be discussed below, or may be performed during a measured frequency depending upon the implementation of the system.

At the next step 304 of the method, a check is performed to see if a trigger has been received, indicating that the frequency deviation has ended according to the trigger criteria. If the trigger has not been received, the method returns to step 302. If it has been received, a restart active power value is determined at step 306. Subsequently, at step 308, the active power value is ramped from the restart value to the baseline active power value.

The two methods 200, 300, described above both act to generally ensure that the set point and output active power values are matched at the end of a frequency deviation, so there is no delay in ramping the active power back to baseline levels. Each achieves this effect in a different way - the first method being based on the specific limit and comparison between determined values, the second based on a point in time at which the frequency deviation is deemed to have ended. While the implementations differ in the details, it will be appreciate that the same technical effect is achieved.

It will be appreciated that various changes and modifications can be made to the present invention without departing from the scope of the appended claims.

**Claims**

1. A method (200) for controlling active power output of a wind turbine generator (14) in response to a frequency event on a power network (16) to which the wind turbine generator (14) is connected, wherein the active power output of the wind turbine generator (14) is limited to be below an upper active power limit and/or above a lower active power limit, the method (200) comprising:
   determining and dispatching active power references to a controller (15) of the wind turbine generator (14) for controlling the wind turbine generator (14),

   wherein, during the frequency event, in which the frequency level of the power network (16) is outside a frequency deadband, the active power references are determined by:

   determining (202) an active power value based on a measured frequency of the power network (160);
   comparing (204) the determined active power value with one of the upper active power limit or the lower active power limit; and
   if the determined active power value is outside the limit the active power reference is set equal to the limit (206), or if the determined active power value is not outside the limit the active power reference is set as the determined active power value (208);

   wherein, after the frequency event, in which the frequency level of the power network (16) is within the frequency deadband, the active power references are determined to change (210) from the final value during the frequency event to a baseline active power value according to a ramp rate limit.

2. The method (200) of claim 1, wherein, during the frequency event, determining (202) the active power value based on the measured frequency of the power network (16) comprises:

   determining an active power adjustment value that corresponds to the measured frequency; and
   subtracting the active power adjustment value from an active power baseline value.

3. The method (200) of claim 2, wherein determining the active power adjustment value comprises comparing the measured frequency with a chart or look-up table (102) indicating a correspondence between active power and frequency.

4. The method (200) of any one of claims 1 to 3, wherein the active power baseline value comprises a minimum value of a nominal active power value and a curtailed active power value.

5. The method (200) of any one of claims 1 to 4, wherein if during the frequency event the frequency level is below the deadband, the relevant limit is the upper active power limit and the upper active power limit is based on the available active power, and wherein if during the frequency event the frequency level is above the deadband, the relevant limit is the lower active power limit and the lower active power limit is based on a user preference.

6. A method (300) for controlling active power output of a wind turbine generator (14) in response to a frequency event on a power network (16) to which the wind turbine generator (14) is connected, wherein the active power output of the wind turbine generator (14) is limited to be below an upper active power limit and/or above a lower active power limit, the method (300) comprising:
   determining and dispatching active power references to a controller of the wind turbine generator for controlling the wind turbine generator,

   wherein, during the frequency event, in which the frequency level of the power network is outside a frequency deadband, the active power references are determined (302) based on a measured frequency of the power network; and
   wherein, after the frequency event, in which the frequency level of the power network is within the frequency deadband, the active power references are determined (308) to change from a restart active power value to a baseline active power value according to a ramp rate limit, the restart active power value being equal to a measured active power output of the wind turbine generator (14).

7. The method (300) of claim 6, wherein during the frequency deviation the active power reference value is determined (302) by:

   determining an active power adjustment value by comparing the measured frequency with a chart or look-up table indicating a correspondence between active power and frequency; and
   subtracting the active power adjustment value from a baseline active power value.

8. The method (300) of any one of claims 6 to 7, wherein the active power baseline value comprises a minimum of an available active power value and a curtailed active power value.

9. The method (300) of any one of claims 6 to 8, wherein if during the frequency event the frequency level is below the deadband, the relevant limit is the upper active power limit and the upper active power limit is based on the available active power, and wherein if during the frequency event the frequency level is above the deadband, the relevant limit is the lower active power limit and the lower active power limit is based on a user preference.

10. The method (300) of any one of claims 6 to 9, wherein the frequency deviation is deemed to have ended upon determination that a trigger condition is met, wherein the trigger condition comprises at least one of: the frequency level being within the frequency deadband; the frequency level is equal to or exceeds a threshold frequency value; a difference between the measured active power value and the relevant active power limit is equal to or exceeds a threshold value.

11. A power plant controller (22) configured to perform the method (200, 300) of any one of claims 1 to 10.

12. A computer-readable storage medium comprising instructions that, when executed by a computer, cause the computer to perform the method (200, 300) of any one of claims 1 to 10.

**Patentansprüche**

1. Verfahren (200) zum Steuern einer Wirkleistungsausgabe einer Windkraftanlage (14) als Reaktion auf ein Frequenzereignis in einem Leistungsnetzwerk (16), mit dem die Windkraftanlage (14) verbunden ist, wobei die Wirkleistungsausgabe der Windkraftanlage (14) begrenzt wird, um unter einer oberen Wirkleistungsgrenze und/oder über einer unteren Wirkleistungsgrenze zu liegen, wobei das Verfahren (200) umfasst:

Bestimmen und Versenden von Wirkleistungsreferenzen an eine Steuereinheit (15) der Windkraftanlage (14) zum Steuern der Windkraftanlage (14), wobei während des Frequenzereignisses, bei dem der Frequenzpegel des Leistungsnetzwerks (16) außerhalb einer Frequenztotzone liegt, die Wirkleistungsreferenzen bestimmt werden durch:

Bestimmen (202) eines Wirkleistungswerts basierend auf einer gemessenen Frequenz des Leistungsnetzwerks (160); Vergleichen (204) des bestimmten Wirkleistungswerts mit einer der oberen Wirkleistungsgrenze oder der unteren Wirkleistungsgrenze; und wenn der bestimmte Wirkleistungswert außerhalb des Grenzwerts liegt, die Wirkleistungsreferenz gleich dem Grenzwert (206) eingestellt wird, oder wenn der bestimmte Wirkleistungswert nicht außerhalb des Grenzwerts liegt, die Wirkleistungsreferenz als der bestimmte Wirkleistungswert (208) eingestellt wird;

wobei nach dem Frequenzereignis, bei dem der Frequenzpegel des Leistungsnetzwerks (16) innerhalb der Frequenztotzone liegt, bestimmt wird, dass sich die Wirkleistungsreferenzen von dem Endwert während des Frequenzereignisses auf einen Basiswirkleistungswert gemäß einer Rampenratengrenze ändern (210).

2. Verfahren (200) nach Anspruch 1, wobei während des Frequenzereignisses das Bestimmen (202) des Wirkleistungswerts basierend auf der gemessenen Frequenz des Leistungsnetzwerks (16) umfasst:

Bestimmen eines Wirkleistungsanpassungswerts, welcher der gemessenen Frequenz entspricht; und Subtrahieren des Wirkleistungsanpassungswerts von einem Wirkleistungsbasiswert.

3. Verfahren (200) nach Anspruch 2, wobei das Bestimmen des Wirkleistungsanpassungswerts das Vergleichen der gemessenen Frequenz mit einem Diagramm oder einer Nachschlagetabelle (102) umfasst, die eine Entsprechung zwischen Wirkleistung und Frequenz angibt.

4. Verfahren (200) nach einem der Ansprüche 1 bis 3, wobei der Wirkleistungsbasiswert einen Mindestwert aus einem nominalen Wirkleistungswert und einem eingeschränkten Wirkleistungswert umfasst.

5. Verfahren (200) nach einem der Ansprüche 1 bis 4, wobei, wenn während des Frequenzereignisses der Frequenzpegel unterhalb der Totzone liegt, die relevante Grenze die obere Wirkleistungsgrenze ist und die obere Wirkleistungsgrenze auf der verfügbaren Wirkleistung basiert, und wobei, wenn während des Frequenzereignisses der Frequenzpegel oberhalb der Totzone liegt, die relevante Grenze die untere Wirkleistungsgrenze ist und die untere Wirkleistungsgrenze auf einer Benutzerpräferenz basiert.

6. Verfahren (300) zum Steuern einer Wirkleistungsausgabe einer Windkraftanlage (14) als Reaktion auf ein Frequenzereignis in einem Leistungsnetzwerk (16), mit dem die Windkraftanlage (14) verbunden ist, wobei die Wirkleistungsausgabe der Windkraftanlage (14) begrenzt wird, um unter einer oberen Wirkleistungsgrenze und/oder über einer unteren Wirkleistungsgrenze zu liegen, wobei das Verfahren (300) umfasst:

Bestimmen und Versenden von Wirkleistungsreferenzen an eine Steuereinheit der Windkraftanlage zum Steuern der Windkraftanlage, wobei während des Frequenzereignisses, bei dem der Frequenzpegel des Leistungsnetzwerks außerhalb einer Frequenztotzone liegt, die Wirkleistungsreferenzen basierend auf einer gemessenen Frequenz des Leistungsnetzwerks bestimmt (302) werden; und wobei nach dem Frequenzereignis, bei dem der Frequenzpegel des Stromnetzes innerhalb der Frequenztotzone liegt, die Wirkleistungsreferenzen bestimmt (308) werden, um sie von einem Neustart-Wirkleistungswert auf einen Basislinien-Wirkleistungswert gemäß einer Rampenratengrenze zu ändern, wobei der Neustart-Wirkleistungswert gleich einer gemessenen Wirkleistungsausgabe der Windkraftanlage (14) ist.

7. Verfahren (300) nach Anspruch 6, wobei während der Frequenzabweichung der Wirkleistungsreferenzwert bestimmt (302) wird durch:

Bestimmen des Wirkleistungsanpassungswerts durch Vergleichen der gemessenen Frequenz mit einem Diagramm oder einer Nachschlagetabelle, die eine Entsprechung zwischen Wirkleistung und Frequenz angibt; und Subtrahieren des Wirkleistungsanpassungswerts von einem Basiswirkleistungswert.

8. Verfahren (300) nach einem der Ansprüche 6 bis 7, wobei der Wirkleistungsbasiswert ein Minimum eines verfügbaren Wirkleistungswerts und eines eingeschränkten Wirkleistungswerts umfasst.

9. Verfahren (300) nach einem der Ansprüche 6 bis 8, wobei, wenn während des Frequenzereignisses der Frequenzpegel unterhalb der Totzone liegt, die relevante Grenze die obere Wirkleistungsgrenze ist und die obere Wirkleistungsgrenze auf der verfügbaren Wirkleistung basiert, und wobei, wenn während des Frequenzereignisses der Frequenzpegel oberhalb der Totzone liegt, die relevante Grenze die untere Wirkleistungsgrenze ist und die untere Wirkleistungsgrenze auf einer Benutzerpräferenz basiert.

10. Verfahren (300) nach einem der Ansprüche 6 bis 9, wobei die Frequenzabweichung bei einer Bestimmung als beendet gilt, dass eine Auslösebedingung erfüllt ist, wobei die Auslösebedingung mindestens eines davon umfasst dass: der Frequenzpegel innerhalb der Frequenztotzone liegt; der Frequenzpegel gleich einem Frequenzschwellenwert ist, oder diesen überschreitet; eine Differenz zwischen dem gemessenen Wirkleistungswert und der relevanten Wirkleistungsgrenze gleich einem Schwellenwert ist, oder diesen überschreitet.

11. Parksteuervorrichtung (22), die konfiguriert ist, um das Verfahren (200, 300) nach einem der Ansprüche 1 bis 10 durchzuführen.

12. Computerlesbares Speichermedium, das Anweisungen umfasst, die, wenn sie durch einen Computer ausgeführt werden, den Computer veranlassen, das Verfahren (200, 300) nach einem der Ansprüche 1 bis 10 durchzuführen.

## Revendications

1. Procédé (200) pour commander une sortie de puissance active d'une éolienne (14) à la suite d'un événement de fréquence sur un réseau de puissance (16) auquel l'éolienne (14) est connectée, dans lequel la sortie de puissance active de l'éolienne (14) est limitée pour être inférieure à une limite de puissance active supérieure et/ou supérieure à une limite de puissance active inférieure, le procédé (200) comprenant :

   la détermination et l'envoi de références de puissance active à un dispositif de commande (15) de l'éolienne (14) pour commander l'éolienne (14),
   dans lequel, pendant l'événement de fréquence dans lequel le niveau de fréquence du réseau de puissance (16) est en dehors d'une bande morte de fréquence, les références de puissance active sont déterminées en :

      déterminant (202) une valeur de puissance active sur la base d'une fréquence mesurée du réseau de puissance (160) ;
      comparant (204) la valeur de puissance active déterminée avec une de la limite de puissance active supérieure ou de la limite de puissance active inférieure ; et
      si la valeur de puissance active déterminée est en dehors de la limite, la référence de puissance active est définie égale à la limite (206) ou, si la valeur de puissance active déterminée n'est pas en dehors de la limite, la référence de puissance active est définie comme étant la valeur de puissance active déterminée (208) ;

   dans lequel, après l'événement de fréquence dans lequel le niveau de fréquence du réseau de puissance (16) est dans la bande morte de fréquence, les références de puissance active sont déterminées pour passer (210) de la valeur finale pendant l'événement de fréquence à une valeur de puissance active de base selon une limite de taux de rampe.

2. Procédé (200) selon la revendication 1, dans lequel, pendant l'événement de fréquence, la détermination (202) de la valeur de puissance active sur la base de la fréquence mesurée du réseau de puissance (16) comprend :

   la détermination d'une valeur d'ajustement de puissance active qui correspond à la fréquence mesurée ; et
   la soustraction de la valeur d'ajustement de puissance active d'une valeur de base de puissance active.

3. Procédé (200) selon la revendication 2, dans lequel la détermination de la valeur d'ajustement de puissance active comprend la comparaison de la fréquence mesurée avec un graphique ou une table de consultation (102) indiquant une correspondance entre la puissance active et la fréquence.

4. Procédé (200) selon l'une quelconque des revendications 1 à 3, dans lequel la valeur de base de puissance active comprend une valeur minimale d'une valeur de puissance active nominale et d'une valeur de puissance active délestée.

5. Procédé (200) selon l'une quelconque des revendications 1 à 4, dans lequel, si, pendant l'événement de fréquence, le niveau de fréquence est inférieur à la bande morte, la limite pertinente est la limite de puissance active supérieure, et la limite de puissance active supérieure est basée sur la puissance active disponible, et dans lequel, si, pendant l'événement de fréquence, le niveau de fréquence est supérieur à la bande morte, la limite pertinente est la limite de puissance active inférieure, et la limite de puissance active inférieure est basée sur une préférence d'utilisateur.

6. Procédé (300) pour commander une sortie de puissance active d'une éolienne (14) à la suite d'un événement de fréquence sur un réseau de puissance (16) auquel l'éolienne (14) est connectée, dans lequel la sortie de puissance active de l'éolienne (14) est limitée pour être inférieure à une limite de puissance active supérieure et/ou supérieure à une limite de puissance active inférieure, le procédé (300) comprenant :

   la détermination et l'envoi de références de puissance active à un dispositif de commande de l'éolienne pour commander l'éolienne,
   dans lequel, pendant l'événement de fréquence dans lequel le niveau de fréquence du réseau de puissance est en dehors d'une bande morte de fréquence, les références de puissance active sont déterminées (302) sur la base d'une fréquence mesurée du réseau de puissance ; et
   dans lequel, après l'événement de fréquence dans lequel le niveau de fréquence du réseau de puissance est dans la bande morte de fréquence, les références de puissance active sont déterminées (308) pour passer d'une valeur de puissance active de redémarrage à une valeur de puissance active de base selon une limite de taux de rampe, la valeur de puissance active de redémarrage étant égale à une sortie de puissance active mesurée de l'éolienne (14).

7. Procédé (300) selon la revendication 6, dans lequel, pendant l'écart de fréquence, la valeur de référence de puissance active est déterminée (302) en :

   déterminant une valeur d'ajustement de puissance active en comparant la fréquence mesurée avec un graphique ou une table de consultation indiquant une correspondance entre la puissance active et la fréquence ; et
   soustrayant la valeur d'ajustement de puissance active d'une valeur de puissance active de base.

8. Procédé (300) selon l'une quelconque des revendications 6 à 7, dans lequel la valeur de base de puissance active comprend un minimum d'une valeur de puissance active disponible et d'une valeur de puissance active délestée.

9. Procédé (300) selon l'une quelconque des revendications 6 à 8, dans lequel, si, pendant l'événement de fréquence, le niveau de fréquence est inférieur à la bande morte, la limite pertinente est la limite de puissance active supérieure, et la limite de puissance active supérieure est basée sur la puissance active disponible, et dans lequel, si, pendant l'événement de fréquence, le niveau de fréquence est supérieur à la bande morte, la limite pertinente est la limite de puissance active inférieure, et la limite de puissance active inférieure est basée sur une préférence d'utilisateur.

10. Procédé (300) selon l'une quelconque des revendications 6 à 9, dans lequel l'écart de fréquence est considéré comme terminé lors de la détermination qu'une condition de déclenchement est remplie, dans lequel la condition de déclenchement comprend au moins l'un de : le niveau de fréquence est dans la bande morte de fréquence ; le niveau de fréquence qui est égal ou supérieur à une valeur de fréquence de seuil ; une différence entre la valeur de puissance active mesurée et la limite de puissance active appropriée qui est égale ou supérieure à une valeur de seuil.

11. Dispositif de commande de centrale électrique (22) configuré pour réaliser le procédé (200, 300) selon l'une quelconque des revendications 1 à 10.

12. Support de stockage lisible par ordinateur comprenant des instructions qui, lorsqu'elles sont exécutées par un ordinateur, amènent l'ordinateur à réaliser le procédé (200, 300) selon l'une quelconque des revendications 1 à 10.

Figure 1

Figure 2

Figure 3

Determine active power value based on
measured frequency

202

Is determined value above upper active
power limit/below lower active power limit?

204

Yes | No

Set active power
set point to limit
value

206

Set active power
set point to
determined value

208

Has frequency event finished?

210

No

Yes

Change active power set point back to
normal values

212

Figure 4

200

Figure 5

Figure 6

```
┌─────────────────────────────────────────────┐
│   Determine active power value based on      │◄──┐
│            measured frequency                │   │
└─────────────────────────────────────────────┘   │
302                      │                          │
                         ▼                          │
┌─────────────────────────────────────────────┐   │
│  Has trigger been received or trigger        │ No│
│  criteria met/has frequency deviation ended? │───┘
└─────────────────────────────────────────────┘
304                      │ Yes
                         ▼
┌─────────────────────────────────────────────┐
│      Determine restart active power value    │
└─────────────────────────────────────────────┘
306                      │
                         ▼
┌─────────────────────────────────────────────┐
│  Ramp active power set point from restart    │
│         value back to normal levels          │
└─────────────────────────────────────────────┘
308
```

300

Figure 7

**REFERENCES CITED IN THE DESCRIPTION**

**Patent documents cited in the description**

- US 20190003456 A1
- US 2015137519 A1
- US 2015159627 A1
- CN 108199421 A